(19) Europäisches Patentamt
European Patent Office
Office européen des brevets

(11) EP 4 810 547 A1

(12) **EUROPEAN PATENT APPLICATION**
published in accordance with Art. 153(4) EPC

(43) Date of publication:
**23.09.2026 Bulletin 2026/39**

(21) Application number: **24891838.5**

(22) Date of filing: **10.10.2024**

(51) International Patent Classification (IPC):
***C08J 7/04*** *(2020.01)* ***C08J 7/044*** *(2020.01)*
***C08J 5/18*** *(2006.01)* ***C09D 183/04*** *(2006.01)*
***C09D 7/65*** *(2018.01)* ***C08L 1/02*** *(2006.01)*
***C08L 33/06*** *(2006.01)* ***C08L 61/28*** *(2006.01)*
***H01M 4/04*** *(2006.01)*

(52) Cooperative Patent Classification (CPC):
**C08J 5/18; C08J 7/04; C08J 7/044; C08L 1/02; C08L 33/06; C08L 61/28; C09D 7/65; C09D 183/04; H01M 4/04;** Y02E 60/10

(86) International application number:
**PCT/KR2024/096289**

(87) International publication number:
**WO 2025/105892 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 KR 20230156587**

(71) Applicant: **Youlchon Chemical Co., Ltd.**
**Seoul 07057 (KR)**

(72) Inventors:
- **JANG, Nam Yun**
**Ansan-si, Gyeonggi-do 15430 (KR)**
- **HWANG, Bo Kyeok**
**Ansan-si, Gyeonggi-do 15430 (KR)**
- **JEON, Seung Hwan**
**Ansan-si, Gyeonggi-do 15430 (KR)**
- **KIM, Jae Yong**
**Ansan-si, Gyeonggi-do 15430 (KR)**
- **KIM, Yong Kyu**
**Ansan-si, Gyeonggi-do 15430 (KR)**
- **HAN, Eunjung**
**Ansan-si, Gyeonggi-do 15430 (KR)**

(74) Representative: **Maiwald GmbH**
**Elisenhof**
**Elisenstraße 3**
**80335 München (DE)**

# (54) RELEASE FILM FOR TRANSFERRING LITHIUM AND MANUFACTURING METHOD FOR SAME

(57) The present invention relates to a release film for transferring lithium and a manufacturing method for same and, more specifically, to: a release film for transferring lithium, by lithium (Li) being deposited on the release film and then transferred to a current collector of a battery, wherein when lithium (Li) is deposited on the release film, the generation of pin holes is minimized, resulting in an excellent deposition efficiency and excellent transfer efficiency of the lithium deposited on the release film to the current collector; and a manufacturing method for same.

[FIG. 1]

30
20
10

EP 4 810 547 A1

## Description

### TECHNICAL FIELD

The present invention relates to a release film for transferring lithium and a method for manufacturing the same, and more specifically to a release film for depositing lithium (Li) on a release film and then transferring the same to a current collector of a battery, wherein when depositing lithium (Li) on the release film, the generation of pin holes is minimized, thereby improving the deposition efficiency, and the release film for transferring lithium has excellent efficiency in transferring lithium deposited on the release film to a current collector, and a method for manufacturing the same.

### BACKGROUND ART

In batteries, specifically secondary batteries, the battery capacity is reduced compared to the theoretical capacity of a negative electrode material because a large proportion of lithium ions released from a positive electrode during the first charge remain absorbed in a negative electrode. In order to avoid such irreversible capacity loss, a technique is disclosed in which lithium equivalent to the irreversible capacity loss is absorbed in the negative electrode in advance, and then, the secondary battery is assembled to start charging and discharging. By using such a technique, a high proportion of lithium ions released from the positive electrode during the first charge can be recovered to the negative electrode, thereby increasing the battery capacity.

Meanwhile, as a universal method for pre-absorbing lithium into the negative electrode, a method of depositing lithium on the negative electrode is being used. In order to deposit lithium equivalent to the irreversible capacity, a method of increasing the amount of lithium deposited by pre-treating graphite material or silicon graphite material on the current collector is being researched.

However, graphite materials have limited capacity when lithium ions move, and silicon graphite materials are likely to cause rapid volume expansion when lithium ions move, which can cause problems with battery durability.

For this reason, there is a demand for the development of a new method capable of pre-charging a sufficient amount of lithium into the negative electrode and/or preventing volume expansion due to an increase in the amount of lithium, and as one of these methods, a method of depositing lithium metal on a release film and then transferring the same to a current collector, preferably an anode current collector, is being attempted.

In conclusion, with regard to the method of depositing lithium on a release film and then transferring the same to a current collector, a method is needed to secure the uniform deposition of lithium and high transfer efficiency.

### DISCLOSURE

### TECHNICAL PROBLEM

The present invention has been devised to solve the above problems, and has an object to provide a release film for transferring lithium capable of securing uniform deposition performance and transfer efficiency, and a method for manufacturing the same.

In addition, for the convenience of usage, the present invention has an object to provide a release film for transferring lithium and a method for manufacturing the same, wherein when a plurality of release films for transferring lithium of the present invention are laminated and these are separated again, not only is the release film excellent in the release property, but also the release film for transferring lithium can prevent the phenomenon of lithium (Li) being transferred to a part other than a part where lithium (Li) is deposited.

### TECHNICAL SOLUTION

In order to solve the above-described problems, the release film for transferring lithium according to the present invention may have a structure in which a first release layer; a base film; and a second release layer are sequentially laminated/

In a preferred embodiment of the present invention, the release film for transferring lithium according to the present invention may satisfy Condition (1) below:

$$(1)\ A < B$$

wherein in Condition (1) above, A represents a release force of the first release layer, and B represents a release force of the second release layer.

In a preferred embodiment of the present invention, the release film for transferring lithium may further satisfy Condition (2) below:

$$(2)\ A : B = 1 : 1.1 \text{ to } 5.0$$

wherein in Condition (2) above, A represents a release force of the first release layer, and B represents a release force of the second release layer.

In a preferred embodiment of the present invention, the base film and the first release layer may have a thickness ratio of 1:0.0014 to 0.0026.

In a preferred embodiment of the present invention, the base film and the second release layer may have a thickness ratio of 1:0.001 to 0.0018.

In a preferred embodiment of the present invention, in the release film for transferring lithium according to the present invention, after lithium is deposited on one surface of the second release layer to a thickness of 2 to 25 μm, when white light is irradiated on the first release layer, 100 or less pin holes may be generated per unit area of 10 cm × 10 cm in the deposited lithium.

In a preferred embodiment of the present invention, in the release film for transferring lithium according to the present invention, after lithium is deposited on one surface of the second release layer to a thickness of 2 to 8 μm, when white light is irradiated on the first release layer, 100 or less pin holes may be generated per unit area of 10 cm × 10 cm in the deposited lithium.

In a preferred embodiment of the present invention, the second release layer may include a resin composition.

In a preferred embodiment of the present invention, the resin composition may include a silicone-based resin in an amount of 10 to 70 wt% based on the total weight%.

In a preferred embodiment of the present invention, the second release layer may include 0.1 to 5 parts by weight of a catalyst and 0.1 to 5 parts by weight of an adhesion enhancer, based on 100 parts by weight of the resin composition.

In a preferred embodiment of the present invention, the first release layer may include 2.2 to 25 wt% of silicon (Si) based on the total weight%.

In a preferred embodiment of the present invention, the second release layer may include 2 to 5 wt% of silicon (Si) based on the total weight%.

In a preferred embodiment of the present invention, the base film may include one or more selected from polyethylene terephthalate (PET), polypropylene (PP), polybutylene terephthalate (PBT), polyethylene naphthalate (PEN), polyimide (PI) and polyethylene (PE).

In a preferred embodiment of the present invention, the resin composition may include a silicone-based resin and a non-silicone-based resin.

In a preferred embodiment of the present invention, the silicone-based resin may include one or more selected from an addition-reaction type silicone-based resin, a condensation-reaction type silicone-based resin and a UV-reaction type silicone-based resin.

In a preferred embodiment of the present invention, the non-silicone-based resin may include one or more selected from a cellulose resin, an acrylate-based resin, a melamine-based resin and an alkyd-based resin.

Meanwhile, the method for manufacturing a release film for transferring lithium according to the present invention may include a first step of preparing a base film; and a second step of applying a composition for forming a first release layer on one surface of the base film, applying a composition for forming a second release film on the other surface of the base film, and then curing to form a first release layer on one surface of the base film and form a second release layer on the other surface of the base film, wherein the release film satisfies Condition (1) below:

$$(1)\ A < B$$

wherein in Condition (1) above, A represents a release force of the first release layer, and B represents a release force of the second release layer.

In a preferred embodiment of the present invention, the release film for transferring lithium according to the present invention may further satisfy Condition (2) below:

$$(2)\ A : B = 1 : 1.1 \text{ to } 5.0$$

wherein in Condition (2) above, A represents a release force of the first release layer, and B represents a release force of

the second release layer.

In a preferred embodiment of the present invention, after lithium is deposited on one surface of the second release layer to a thickness of 2 to 25 μm, when white light is irradiated on the first release layer, 100 or less pin holes may be generated per unit area of 10 cm × 10 cm in the deposited lithium.

In a preferred embodiment of the present invention, the composition for forming a second release layer may be a mixture of a resin composition, a catalyst, an adhesion enhancer and a solvent.

In a preferred embodiment of the present invention, the resin composition may be mixed with 10 to 70 wt% of a silicone-based resin based on the total weight%.

In a preferred embodiment of the present invention, the composition for forming a second release layer may be a mixture of 0.1 to 5 parts by weight of a catalyst, 0.1 to 5 parts by weight of an adhesion enhancer and 800 to 1,000 parts by weight of a solvent, based on 100 parts by weight of the resin composition.

In a preferred embodiment of the present invention, the curing may be performed at a temperature of 100 to 140°C for 10 to 40 seconds.

## ADVANTAGEOUS EFFECTS

The release film for transferring lithium according to the present invention and the method for manufacturing the same are release films for depositing lithium (Li) on the release film and then transferring the same to a current collector of a battery, and can increase the capacity of a secondary battery by pre-absorbing lithium equivalent to the amount of lithium ions irreversibly lost during the first charge and discharge of a secondary battery into an anode current collector.

In addition, the release film for transferring lithium according to the present invention and the method for manufacturing the same have excellent deposition efficiency by minimizing the generation of pin holes when depositing lithium (Li) on the release film.

In addition, the release film for transferring lithium according to the present invention and the method for manufacturing the same have excellent efficiency in transferring lithium deposited on the release film to a current collector.

In addition, the release film for transferring lithium according to the present invention and the method for manufacturing the same are excellent in the release property even when a plurality of release films for transferring lithium according to the present invention are laminated and these are separated again for the convenience of usage.

In addition, the release film for transferring lithium according to the present invention and the method for manufacturing the same can prevent the phenomenon of lithium (Li) being transferred to a part other than a part where lithium (Li) is deposited when a plurality of release films for transferring lithium of the present invention are laminated and separated again for the convenience of usage.

## DESCRIPTION OF DRAWINGS

FIG. 1 is a cross-sectional diagram illustrating a release film for transferring lithium on one surface according to a preferred embodiment of the present invention.

FIG. 2 is a mimetic diagram showing the process of depositing lithium on one surface of a second release layer according to a preferred embodiment of the present invention, and then observing the generation of pin holes in the deposited lithium by irradiating white light on a first release layer.

## MODES OF THE INVENTION

Hereinafter, with reference to the attached drawings, embodiments of the present invention will be described in detail so that those skilled in the art can easily practice the present invention. The present invention may be implemented in various different forms and is not limited to the embodiments described herein. In the drawings, parts that are not related to the description are omitted in order to clearly describe the present invention, and the same reference numerals are assigned to the same or similar components throughout the specification.

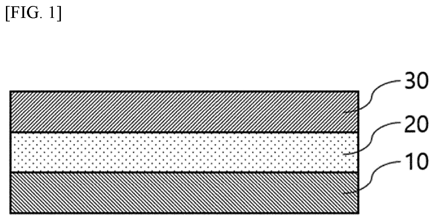

Referring to FIG. 1, the release film for transferring lithium according to the present invention may have a structure in which a first release layer 10, a base film 20 and a second release layer 30 are sequentially laminated.

The first release layer 10 is a film that not only improves a release property but also prevents lithium that may be deposited on the second release layer 30 from being transferred to the opposite surface, and may include a silicone-based resin, and preferably include one or more selected from an addition-reaction type silicone-based resin, a condensation-reaction type silicone-based resin and a UV-reaction type silicone-based resin, and preferably may include an addition-reaction type silicone-based resin.

In addition, the first release layer 10 may have a thickness of 0.05 to 5 μm, preferably a thickness of 0.1 to 1 μm,

and more preferably a thickness of 0.1 to 0.3 μm. If the thickness is less than 0.05 μm, there may be a problem of increased release force, and if it is more than 5 μm, there may be a problem of blocking occurring.

In addition, the first release layer 10 may include silicon (Si) in an amount of 2.2 to 25 wt%, preferably 3 to 20 wt%, more preferably 5 to 15 wt%, and even more preferably 10 to 15 wt%, based on the total weight%. If it includes less than 2.2 wt% of silicon, there may be a problem of a reduction in the lithium transfer prevention effect due to an increase in release force, and if it includes more than 25 wt%, there may be a problem of the silicon (Si) component of the first release layer 10 being transferred to lithium that may be deposited on the second release layer 30.

In addition, the first release layer 10 may include 0.1 to 5 parts by weight, preferably 0.5 to 3.0 parts by weight, and more preferably 1.0 to 2.0 parts by weight of a catalyst, based on 100 parts by weight of the silicone-based resin. If the catalyst is included in an amount less than 0.1 parts by weight, there may be a problem of non-curing, and if it is included in an amount of more than 5 parts by weight, there may be a problem of the release force increasing beyond an appropriate level.

In addition, the catalyst may be any catalyst commonly used in the art, and preferably may include platinum.

Furthermore, the first release layer 10 may include 0.1 to 5 parts by weight, preferably 0.5 to 3.0 parts by weight, and more preferably 0.5 to 1.5 parts by weight of an adhesion enhancer, based on 100 parts by weight of a silicone-based resin. If the adhesion enhancer is included in an amount of less than 0.1 parts by weight, there may be a problem of poor adhesion between the first release layer 10 and the base film 20, and if it is included in an amount of more 5 parts by weight, there may be a problem of silicon (Si) included in the first release layer 10 being transferred to a back surface of the base film 20 (a surface on which the second release layer is formed).

The adhesion enhancer is a material that plays a role in enhancing the adhesion between the first release layer 10 and the base film 20. Any adhesion enhancer commonly used in the art may be used, and preferably, it may include dimethyl epoxide-containing methylvinyl siloxane (dimethyl, methylvinyl siloxane with epoxide).

The base film 20 not only serves as a substrate for forming the first release layer 10 and the second release layer 30, but also serves as a substrate for enabling uniform lithium deposition on the second release layer 30 and/or as a support for transferring lithium that can be deposited on the second release layer 30 to a current collector. Any material used in the art as a base film may be used, and preferably, it may include one or more selected from polyethylene terephthalate (PET), polypropylene (PP), polybutylene terephthalate (PBT), polyethylene naphthalate (PEN), polyimide (PI) and polyethylene (PE), and more preferably, it may include PET.

In addition, the base film 20 of the present invention may have a thickness of 10 to 250 μm, and preferably 25 to 100 μm. If the thickness is less than 10 μm, there may be a problem of thermal deformation occurring in the base film 20 during a lithium (Li) deposition process performed at high temperature, and if it is more than 250 μm, there may be a problem of economic feasibility.

The second release layer 30 is a layer that uniformly deposits lithium (Li) or smoothly transfers lithium (Li) to a current collector, and is a layer on which lithium is deposited on one surface in order to transfer lithium.

The second release layer 30 may have a thickness of 0.01 to 1 μm, preferably 0.05 to 0.5 μm, and more preferably 0.05 to 0.3 μm. If the thickness is less than 0.01 μm, there may be a problem of poor transfer, and if it is more than 1 μm, there may be a problem of blocking occurring during winding.

Meanwhile, the base film 20 and the first release layer 10 may have a thickness ratio of 1:0.0014 to 0.0026, and preferably 1:0.0016 to 0.0024.

In addition, the base film 20 and the second release layer 30 may have a thickness ratio of 1:0.001 to 0.0018, and preferably 1:0.0011 to 0.0016.

The second release layer 30 may include a resin composition, and the resin composition may include a silicone-based resin in an amount of 10 to 70 wt%, preferably 30 to 70 wt%, more preferably 45 to 70 wt%, and even more preferably 55 to 65 wt%, based on the total weight%. If the silicone-based resin is included in an amount of less than 10 wt%, there may be a problem in that the lithium transfer efficiency is significantly reduced, and if it is included in an amount of more than 70 wt%, when lithium is deposited on one surface of the second release layer, there may be a problem in that the generation rate of pin holes in the deposited lithium increases.

Meanwhile, the silicone-based resin may include one or more selected from an addition-reaction type silicone-based resin, a condensation-reaction type silicone-based resin and a UV-reaction type silicone-based resin, and preferably may include an addition-reaction type silicone-based resin.

In addition, the resin composition may include a silicone-based resin and a non-silicon-based resin, and the non-silicon-based resin may be included in an amount of 30 to 90 wt%, preferably 30 to 70 wt%, more preferably 30 to 55 wt%, and even more preferably 35 to 45 wt%, based on the total weight of the resin composition.

In addition, the non-silicon-based resin is a resin that does not include silicon (Si) as a component, and may include one or more selected from a cellulose resin, an acrylate-based resin, a melamine-based resin and an alkyd-based resin, and preferably may include a cellulose resin.

In addition, the second release layer 30 may include 2 to 5 wt%, preferably 3 to 5 wt%, more preferably 3.3 to 5 wt%, and even more preferably 3.8 to 4.9 wt% of silicon (Si) based on the total weight%. If it includes less than 2 wt% of

silicon, there may be a problem in that the lithium transfer efficiency is significantly reduced, and if it includes more than 5 wt%, there may be a problem in that the generation rate of pin holes in the deposited lithium increases when lithium is deposited on one surface of the second release layer.

Furthermore, the second release layer 30 may include 0.1 to 5 parts by weight, preferably 0.5 to 3.0 parts by weight, and more preferably 1.0 to 2.0 parts by weight of a catalyst, based on 100 parts by weight of the resin composition. If the catalyst is included in an amount of less than 0.1 parts by weight, there may be a problem of non-curing, and if it is included in an amount of more than 5 parts by weight, there may be a problem of the peeling strength increasing above a certain level.

In addition, any catalyst commonly used in the art may be used, and it preferably may include platinum.

Furthermore, the second release layer 30 may include 0.1 to 5 parts by weight, preferably 0.5 to 3.0 parts by weight, and more preferably 0.5 to 1.5 parts by weight of an adhesion enhancer, based on 100 parts by weight of the resin composition. If the adhesion enhancer is included in an amount of less than 0.1 parts by weight, there may be a problem of poor adhesion between the second release layer 30 and the base film 20, and if it is included in an amount of more than 5 parts by weight, there may be a problem of silicon (Si) included in the second release layer 30 being transferred to a back surface of the base film 20 (a surface on which the first release layer is formed).

The adhesion enhancer is a material that plays a role in enhancing the adhesion between the second release layer 10 and the base film 20. Any adhesion enhancer commonly used in the art may be used, and preferably, it may include dimethyl epoxide-containing methlyvinyl siloxane (dimethyl, methylvinyl siloxane with epoxide).

Meanwhile, the release film for transferring lithium of the present invention may satisfy Condition (1) below.

$$(1)\ A < B$$

In Condition (1) above, A represents a release force of the first release layer, and B represents a release force of the second release layer.

If Condition (1) is not satisfied, there may be a problem of lithium deposited in the second release layer being transferred to the first release layer.

In addition, the release film for transferring lithium of the present invention may further satisfy Condition (2) below.

$$(2)\ A : B = 1 : 1.1 \text{ to } 5.0,$$

preferably A : B = 1 : 1.5 to 5.0, more preferably A : B = 1 : 2.5 to 5.0, and even more preferably A : B = 1 : 3.5 to 4.5

In Condition (2) above, A represents a release force of the first release layer, and B represents a release force of the second release layer.

If A and B are less than 1:1.1, there may be a problem that lithium that can be deposited on the second release layer is transferred to the first release layer, and if it is more than 1:5.0, the silicon (Si) content of the first release layer may increase, and the increased silicon (Si) content may cause a problem that silicon (Si) is transferred to the lithium surface that can be deposited on the second release layer.

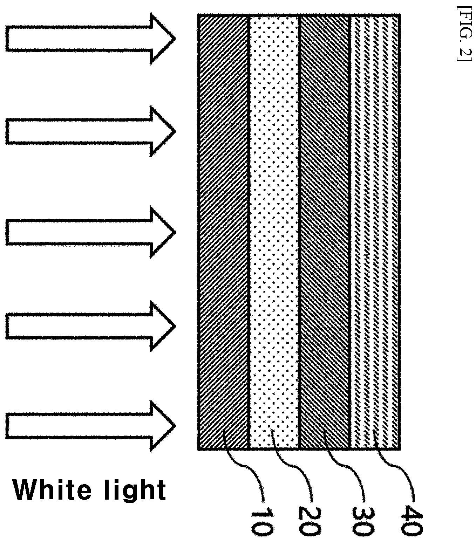

Furthermore, when it is described by referring to FIG. 2, the release film for transferring lithium according to the present invention deposits lithium 40 on one surface of the second release layer 30 to a thickness of 2 to 25 μm, preferably 2 to 20 μm, more preferably 2 to 15 μm, even more preferably 2 to 8 μm, even more preferably 3 to 7 μm, and even more preferably 4 to 6 μm, and then, when white light is irradiated on the second release layer 10, 100 or less pin holes may be generated per unit area of 10 cm × 10 cm in the deposited lithium 40. Pin holes refer to pores generated in lithium 40 during deposition, and if more than 100 pin holes per unit area of 10 cm × 10 cm are generated in lithium 40, there may be a problem in that lithium 40 is not uniformly deposited. In addition, white light refers to light with a wavelength of 400 to 700 nm.

Meanwhile, the method for manufacturing a release film for transferring lithium according to the present invention includes a first step and a second step.

First of all, in the first step of the method for manufacturing a release film for transferring lithium according to the present invention, a base film may be prepared. In this case, the base film is as described above.

Next, in the second step of the method for manufacturing a release film for transferring lithium according to the present invention, a composition for forming a first release layer is applied to one surface of the base film prepared in the first step, a composition for forming a second release layer is applied to the other surface of the base film, and then, these are cured to form a first release layer on one surface of the base film and a second release layer on the other surface of the base film.

The composition for forming a first release layer may be a mixture of a silicone-based resin, a catalyst, an adhesion enhancer and a solvent. Specifically, the composition for forming a first release layer may be a mixture of 0.1 to 5

parts by weight, preferably 0.5 to 3.0 parts by weight, and more preferably 1.0 to 2.0 parts by weight of the catalyst, 0.1 to 5 parts by weight, preferably 0.5 to 3.0 parts by weight, and more preferably 0.5 to 1.5 parts by weight of the adhesion enhancer, and 500 to 5,000 parts by weight, and preferably 550 to 4,000 parts by weight of the solvent, based on 100 parts by weight of the silicone-based resin. In this case, the catalyst and the adhesion enhancer are as described above. In addition, the solvent may be any solvent generally used in the art, and preferably may include one or more selected from toluene, methyl ethyl ketone (MEK), n-Hexane and methyl isobutyl ketone (MIBK).

In addition, the first release layer formed by curing the composition for forming a first release layer may include silicon (Si) in an amount of 2.2 to 25 wt%, preferably 3 to 20 wt%, more preferably 5 to 15 wt%, and even more preferably 10 to 15 wt%, based on the total weight%. In addition, the first release layer is the same as described above.

The composition for forming a second release layer may be a mixture of a resin composition, a catalyst, an adhesion enhancer and a solvent. Specifically, the composition for forming a second release layer may be a mixture of 0.1 to 5 parts by weight, preferably 0.5 to 3.0 parts by weight, and more preferably 1.0 to 2.0 parts by weight of the catalyst, 0.1 to 5 parts by weight, preferably 0.5 to 3.0 parts by weight, and more preferably 0.5 to 1.5 parts by weight of the adhesion enhancer, and 800 to 1,000 parts by weight, and preferably 850 to 950 parts by weight of the solvent, based on 100 parts by weight of the resin composition. In this case, the catalyst and the adhesion enhancer are the same as described above. In addition, the solvent may be any solvent generally used in the art, and preferably may include one or more selected from toluene, methyl ethyl ketone (MEK), n-hexane and methyl isobutyl ketone (MIBK).

In addition, the resin composition may be a mixture of a silicone-based resin and a non-silicone-based resin, and the silicone-based resin may be mixed in an amount of 10 to 70 wt%, preferably 30 to 70 wt%, more preferably 45 to 70 wt%, and even more preferably 55 to 65 wt%, based on the total weight of the resin composition, and the non-silicone-based resin may be mixed in an amount of 30 to 90 wt%, preferably 30 to 70 wt%, more preferably 30 to 55 wt%, and even more preferably 35 to 45 wt%, based on the total weight of the resin composition. In this case, the silicone-based resin and the non-silicone-based resin are the same as described above.

In addition, the second release layer formed by curing the composition for forming a second release layer may include silicon (Si) in an amount of 2 to 5 wt%, preferably 3 to 5 wt%, more preferably 3.3 to 5 wt%, and even more preferably 3.8 to 4.9 wt%, based on the total weight%. In addition, the second release layer is the same as described above.

In addition, the curing of the second step may be performed at a temperature of 100 to 140°C, and preferably 110 to 130°C, for 10 to 40 seconds, and preferably 15 to 25 seconds. If the curing temperature is lower than 100°C, there may be a problem of non-curing, and if it is more than 140°C, there may be a problem of thermal deformation occurring in the base film.

Furthermore, when a release film for transferring lithium manufactured through the method for manufacturing a release film for transferring lithium according to the present invention deposits lithium on one surface of a second release layer to a thickness of 2 to 25 μm, preferably 2 to 20 μm, more preferably 2 to 15 μm, even more preferably 2 to 8 μm, even more preferably 3 to 7 μm, and even more preferably 4 to 6 μm, and then white light is irradiated on the first release layer, 100 or less pin holes may be generated per unit area of 10 cm × 10 cm in the deposited lithium.

In addition, a release film for transferring lithium manufactured through the method for manufacturing a release film for transferring lithium according to the present invention may satisfy Condition (1) below.

$$(1)\ A < B$$

In Condition (1) above, A represents a release force of the first release layer, and B represents a release force of the second release layer.

In addition, a release film for transferring lithium manufactured through the method for manufacturing a release film for transferring lithium according to the present invention may further satisfy Condition (2) below.

$$(2)\ A : B = 1 : 1.1 \text{ to } 5.0,$$

preferably A : B = 1 : 1.5 to 5.0, more preferably A : B = 1 : 2.5 to 5.0, and even more preferably A : B = 1 : 3.5 to 4.5

In Condition (2) above, A represents a release force of the first release layer, and B represents a release force of the second release layer.

Although the present invention has been described above with reference to embodiments, these are merely examples and do not limit the embodiments of the present invention. Those skilled in the art to which the embodiments of the present invention pertain will appreciate that various modifications and applications not exemplified above are possible without departing from the essential characteristics of the present invention. For example, each component specifically shown in the embodiments of the present invention can be modified and implemented. In addition, the differences related

to such modifications and applications should be interpreted as being included in the scope of the present invention defined in the appended claims.

**Preparation Example 1-1: Preparation of composition for forming first release layer**

A composition for forming a first release layer was prepared by mixing 1.5 parts by weight of a catalyst, 1 part by weight of an adhesion enhancer and 600 parts by weight of a solvent, based on 100 parts by weight of a silicone-based resin. In this case, an addition-reaction type silicone-based resin (Dimethyl, 5-hexenylmethyl siloxane) was used as the silicone-based resin, platinum was used as the catalyst, dimethyl epoxide-containing methylvinyl siloxane (Methylvinyl Siloxane with Epoxide) was used as the adhesion enhancer, and toluene was used as the solvent.

**Preparation Example 1-2: Preparation of composition for forming first release layer**

A composition for forming a first release layer was prepared by mixing 1.5 parts by weight of a catalyst, 1 part by weight of an adhesion enhancer and 1,100 parts by weight of a solvent, based on100 parts by weight of a silicone-based resin. In this case, an addition-reaction type silicone-based resin (Dimethyl, 5-hexenylmethyl siloxane) was used as the silicone-based resin, platinum was used as the catalyst, dimethyl epoxide-containing methylvinyl siloxane (Methylvinyl Siloxane with Epoxide) was used as the adhesion enhancer, and toluene was used as the solvent.

**Preparation Example 1-3: Preparation of composition for forming first release layer**

A composition for forming a first release layer was prepared by mixing 1.5 parts by weight of a catalyst, 1 part by weight of an adhesion enhancer and 3,500 parts by weight of a solvent, based on100 parts by weight of a silicone-based resin. In this case, an addition-reaction type silicone-based resin (Dimethyl, 5-hexenylmethyl siloxane) was used as the silicone-based resin, platinum was used as the catalyst, dimethyl epoxide-containing methylvinyl siloxane (Methylvinyl Siloxane with Epoxide) was used as the adhesion enhancer, and toluene was used as the solvent.

**Preparation Example 1-4: Preparation of composition for forming first release layer**

A composition for forming a first release layer was prepared by mixing 1.5 parts by weight of a catalyst, 1 part by weight of an adhesion enhancer and 900 parts by weight of a solvent, based on 100 parts by weight of a mixed composition. In this case, based on the total weight % of the mixed composition, 80 wt% of a silicone-based resin and 20 wt% of dimethylvinylated and trimethylated silica (CAS Reg. No. 68988-89-6) were mixed, platinum was used as the catalyst, dimethyl epoxide-containing methylvinyl siloxane (Methylvinyl Siloxane with Epoxide) was used as the adhesion enhancer, and toluene was used as the solvent. In addition, an addition-reaction type silicone-based resin (Dimethyl, 5-hexenylmethyl siloxane) was used as the silicone-based resin.

**Preparation Example 1-5: Preparation of composition for forming first release layer**

A composition for forming a first release layer was prepared by mixing 1.5 parts by weight of a catalyst, 1 part by weight of an adhesion enhancer, and 900 parts by weight of a solvent, based on 100 parts by weight of a mixed composition. In this case, a mixture of 78 wt% of a silicone-based resin and 22 wt% of dimethylvinylated and trimethylated silica (CAS Reg. No. 68988-89-6) based on the total weight% was used, platinum was used as the catalyst, dimethyl epoxide-containing methylvinyl siloxane (Methylvinyl Siloxane with Epoxide) was used as the adhesion enhancer, and toluene was used as the solvent. In addition, an addition-reaction type silicone-based resin (Dimethyl, 5-hexenylmethyl siloxane) was used as the silicone-based resin.

**Preparation Example 1-6: Preparation of composition for forming first release layer**

A composition for forming a first release layer was prepared by mixing 1.5 parts by weight of a catalyst, 1 part by weight of an adhesion enhancer and 900 parts by weight of a solvent, based on 100 parts by weight of a mixed composition. In this case, a mixture of 70 wt% of a silicone-based resin and 30 wt% of dimethylvinylated and trimethylated silica (CAS Reg. No. 68988-89-6) based on the total weight% was used, platinum was used as the catalyst, dimethyl epoxide-containing methylvinyl siloxane (Methylvinyl Siloxane with Epoxide) was used as the adhesion enhancer, and toluene was used as the solvent. In addition, an addition-reaction type silicone-based resin (Dimethyl, 5-hexenylmethyl siloxane) was used as the silicone-based resin.

**Preparation Example 2-1: Preparation of composition for forming second release layer**

A composition for forming a second release layer was prepared by mixing 1.5 parts by weight of a catalyst, 1 part by weight of an adhesion enhancer and 900 parts by weight of a solvent, based on 100 parts by weight of a resin composition. In this case, a mixture of 60 wt% of a silicone-based resin and 40 wt% of a non-silicone-based resin based on the total weight% of the resin composition was used, platinum was used as the catalyst, dimethyl epoxide-containing methylvinyl siloxane (Methylvinyl Siloxane with Epoxide) was used as the adhesion enhancer, and toluene was used as the solvent. In addition, an addition-reaction type silicone-based resin (Dimethyl, 5-hexenylmethyl siloxane) was used as the silicone-based resin, and a cellulose resin was used as the non-silicone-based resin.

**Preparation Example 2-2: Preparation of composition for forming second release layer**

A composition for forming a second release layer was prepared in the same manner as in Preparation Example 2-1. However, unlike Preparation Example 2-1, a mixture of 50 wt% of a silicone-based resin and 50 wt% of a non-silicone-based resin was used as the resin composition, based on the total weight%.

**Preparation Example 2-3: Preparation of composition for forming second release layer**

A composition for forming a second release layer was prepared in the same manner as in Preparation Example 2-1. However, unlike Preparation Example 2-1, a mixture of 40 wt% of a silicone-based resin and 60 wt% of a non-silicone-based resin was used as the resin composition, based on the total weight%.

**Preparation Example 2-4: Preparation of composition for forming second release layer**

A composition for forming a second release layer was prepared in the same manner as in Preparation Example 2-1. However, unlike Preparation Example 2-1, a mixture of 20 wt% of a silicone-based resin and 80 wt% of a non-silicone-based resin was used as the resin composition, based on the total weight%.

**Preparation Example 2-5: Preparation of composition for forming second release layer**

A composition for forming a second release layer was prepared in the same manner as in Preparation Example 2-1. However, unlike Preparation Example 2-1, a mixture of 80 wt% of a silicone-based resin and 20 wt% of a non-silicone-based resin was used as the resin composition, based on the total weight%.

**Preparation Example 2-6: Preparation of composition for forming second release layer**

A composition for forming a second release layer was prepared in the same manner as in Preparation Example 2-1. However, unlike Preparation Example 2-1, only a silicone-based resin was used as the resin composition.

**Example 1: Preparation of a release film for transferring lithium**

(1) A polyethylene terephthalate (PET) film (XD510P, TAK) with a thickness of 75 μm was prepared as a base film.
(2) Using a bar coater, the composition for forming a first release layer prepared in Preparation Example 1-1 was applied to one surface of the prepared base film, and the composition for forming a second release layer prepared in Preparation Example 2-1 was applied to the other surface of the base film, and then cured at a temperature of 120°C for 20 seconds and aged at a temperature of 40°C for 2 days, thereby forming a first release layer having a thickness of 0.15 μm on one surface of the base film and forming a second release layer having a thickness of 0.1 μm on the other surface of the base film, thereby manufacturing a release film for transferring lithium.

**Example 2: Manufacture of release film for transferring lithium**

A release film for transferring lithium was manufactured in the same manner as in Example 1. However, unlike Example 1, the composition for forming a first release layer prepared in Preparation Example 1-2 was used instead of the composition for forming a first release layer prepared in Preparation Example 1-1 to form a first release layer having a thickness of 0.08 μm, thereby finally manufacturing a release film for transferring lithium.

**Example 3: Manufacture of release film for transferring lithium**

A release film for transferring lithium was manufactured in the same manner as in Example 1. However, unlike Example 1, the composition for forming a first release layer prepared in Preparation Example 1-3 was used instead of the composition for forming a first release layer prepared in Preparation Example 1-1 to form a first release layer having a thickness of 0.025 μm, thereby finally manufacturing a release film for transferring lithium.

**Example 4: Preparation of release film for transferring lithium**

A release film for transferring lithium was manufactured in the same manner as in Example 1. However, unlike Example 1, the composition for forming a first release layer prepared in Preparation Example 1-4 was used instead of the composition for forming a first release layer prepared in Preparation Example 1-1 to form a first release layer having a thickness of 0.1 μm, thereby finally manufacturing a release film for transferring lithium.

**Comparative Example 1: Manufacturing of release film for transferring lithium**

A release film for transferring lithium was manufactured in the same manner as in Example 1. However, unlike Example 1, the composition for forming a first release layer manufactured in Preparation Example 1-5 was used instead of the composition for forming a first release layer prepared in Preparation Example 1-1 to form a first release layer having a thickness of 0.1 μm, thereby finally manufacturing a release film for transferring lithium.

**Comparative Example 2: Manufacture of release film for transferring lithium**

A release film for transferring lithium was manufactured in the same manner as in Example 1. However, unlike Example 1, the composition for forming a first release layer manufactured in Preparation Example 1-6 was used instead of the composition for forming a first release layer prepared in Preparation Example 1-1 to form a first release layer having a thickness of 0.1 μm, thereby finally manufacturing a release film for transferring lithium.

**Example 5: Manufacture of release film for transferring lithium**

A release film for transferring lithium was manufactured in the same manner as in Example 1. However, unlike Example 1, the composition for forming a second release layer manufactured in Preparation Example 2-2 was used instead of the composition for forming a second release layer preapred in Preparation Example 2-1 to form a second release layer having a thickness of 0.1 μm, thereby finally manufacturing a release film for transferring lithium.

**Example 6: Manufacture of release film for transferring lithium**

A release film for transferring lithium was manufactured in the same manner as in Example 1. However, unlike Example 1, a composition for forming a second release layer prepared in Preparation Example 2-3 was used instead of a composition for forming a second release layer manufactured in Preparation Example 2-1 to form a second release layer having a thickness of 0.1 μm, thereby finally manufacturing a release film for transferring lithium.

**Example 7: Manufacture of release film for transferring lithium**

A release film for transferring lithium was manufactured in the same manner as in Example 1. However, unlike Example 1, a composition for forming a second release layer prepared in Preparation Example 2-4 was used instead of a composition for forming a second release layer prepared in Preparation Example 2-1 to form a second release layer having a thickness of 0.1 μm, thereby finally manufacturing a release film for transferring lithium.

**Example 8: Manufacture of release film for transferring lithium**

A release film for transferring lithium was manufactured in the same manner as in Example 1. However, unlike Example 1, a composition for forming a second release layer prepared in Preparation Example 2-5 was used instead of a composition for forming a second release layer prepared in Preparation Example 2-1 to form a second release layer having a thickness of 0.1 μm, thereby finally manufacturing a release film for transferring lithium.

**Example 9: Manufacture of release film for transferring lithium**

A release film for transferring lithium was manufactured in the same manner as in Example 1. However, unlike Example 1, a composition for forming a second release layer prepared in Preparation Example 2-6 was used instead of a composition for forming a second release layer manufactured in Preparation Example 2-1 to form a second release layer having a thickness of 0.1 μm, thereby finally manufacturing a release film for transferring lithium.

**Experimental Example 1: Evaluation of release property and whether lithium is transferred to the first release layer**

Lithium was deposited at a thickness of 5 μm on one surface of the release layer of each of the release films for transferring lithium manufactured in Examples 1 to 9 and Comparative Examples 1 to 2 by using the physical vapor deposition (PVD) method. Two sheets of the release film for transferring lithium on which lithium was deposited were laminated, and a weight having a load of 2 kg/cm$^2$ was laminated on the lithium formed on the surface of the release film for transferring lithium, and then left at a temperature of 40° C. for 2 days. Thereafter, when the two laminated sheets of the release film for transferring lithium on which lithium was deposited were separated, if no sticky sound was generated at all, it was rated as ◎, if only a very small sticky sound was generated, it was rated as ◦, and if a large sticky sound was generated, it was rated as ×, and the results are shown in Table 1 below. In addition, after evaluating the release property, it was confirmed whether lithium was transferred to the first release layer of the separated release film for transferring lithium. If lithium was not generated, it was evaluated as ◦, and if lithium was generated, it was evaluated as ×, and it was evaluated whether lithium was transferred to the first release layer, and the results are shown in Table 1 below.

**Experimental Example 2: Measurement of the number of pin holes**

Lithium was deposited to a thickness of 5 μm on one surface of the second release layer of each of the release films for transferring lithium manufactured in Examples 1 to 9 and Comparative Examples 1 to 2 by using the physical vapor deposition (PVD) method. Thereafter, white light was irradiated on the first release layer of each of the release films for transferring lithium manufactured in Examples 1 to 9 and Comparative Examples 1 to 2, and the deposited lithium was observed with the naked eye. The number of pinholes generated per unit area of 10 cm × 10 cm is shown in Table 1.

**Experimental Example 3-1: Measurement of release force of first release layer**

An acrylic adhesive tape (TESA7475) measuring 25 mm in width × 175 mm in length was attached to the first release layer of the release films for transferring lithium manufactured in Examples 1 to 9 and Comparative Examples 1 to 2, and then, the release force of the first release layer of the release films for transferring lithium manufactured in Examples 1 to 9 and Comparative Examples 1 to 2 was measured according to the Finat-10 evaluation method, and the results are shown in Table 1 below.

**Experimental Example 3-2: Measurement of release force of second release layer**

An acrylic adhesive tape (TESA7475) measuring 25 mm in width × 175 mm in length was attached to the second release layer of the release films for transferring lithium manufactured in Examples 1 to 9 and Comparative Examples 1 to 2, and then, the release force of the second release layer of the release films for transferring lithium manufactured in Examples 1 to 9 and Comparative Examples 1 to 2 was measured according to the Finat-10 evaluation method, and the results are shown in Table 1 below.

**Experimental Example 4: Measurement of silicon (Si) content**

Using a scanning electron microscope (SEM) equipped with an Energy Dispersive X-ray Spectroscopy (EDS), the silicon (Si) content included in each of the first release layer and the second release layer of the release films for transferring lithium manufactured in Examples 1 to 9 and Comparative Examples 1 to 2 was measured, and the results are shown in Table 1 below.

**Experimental Example 5: Measurement of lithium transfer efficiency**

Lithium was deposited at a thickness of 5 μm on one surface of the second release layer of each of the release films for transferring lithium manufactured in Examples 1 to 9 and Comparative Examples 1 to 2 by using the physical vapor deposition (PVD) method. Thereafter, the lithium deposited on the release film for transferring lithium was roll-laminated to

one surface of a copper foil used as an anode current collector, and the release film for transferring lithium was removed, thereby transferring lithium to the copper foil. After the transfer, the area of lithium remaining on the release film for transferring lithium was visually confirmed, and the lithium transfer efficiency was calculated by using Calculation Formula 1 below, and the results are shown in Table 1 below.

Lithium transfer efficiency (%) = (Area of lithium deposited on release film for transferring lithium - Area of lithium remaining on release film for transferring lithium, after transferring lithium deposited on release film for transferring lithium to copper foil) / Area of lithium deposited on release film for transferring lithium [Calculation Formula 1]

[Table 1]

| Classification | | Example 1 | Example 2 | Example 3 | Example 4 | Comparative Example 1 | Comparative Example 2 |
|---|---|---|---|---|---|---|---|
| Release Property | | ◎ | ◎ | ◎ | ○ | X | X |
| Whether Lithium Is Transferred to First Release Layer | | ○ | ○ | ○ | ○ | ○ | X |
| Number of Pin Holes (Units) | | 100 or less | 100 or less | 100 or less | 100 or less | 100 or less | 100 or less |
| Release Force (gf/inch) | First Release Layer | 11 | 15 | 20 | 35 | 41 | 60 |
| | Second Release Layer | 42 | 42 | 42 | 42 | 42 | 42 |
| Silicon Content (wt%) | First Release Layer | 12.9 | 8.4 | 7.5 | 5.7 | 4.9 | 2.1 |
| | Second Release Layer | 4.77 | 4.77 | 4.77 | 4.77 | 4.77 | 4.77 |
| Lithium Transfer Efficiency (%) | | 100 | 100 | 100 | 100 | 100 | 100 |

[Table 2]

| Classification | | Example 1 | Example 5 | Example 6 | Example 7 | Example 8 | Example 9 |
|---|---|---|---|---|---|---|---|
| Release Property | | ◎ | ◎ | ◎ | ◎ | ◎ | ◎ |
| Whether Lithium Is Transferred to First Release Layer | | ○ | ○ | ○ | ○ | ○ | ○ |
| Number of Pin Holes (Units) | | 100 or less | 100 or less | 10 or less | 10 or less | 300 ~ 350 | 250 ~ 450 |
| Release Force (gf/inch) | First Release Layer | 11 | 11 | 11 | 11 | 11 | 11 |
| | Second Release Layer | 35 | 37 | 42 | 45 | 32 | 14 |
| Silicon Content (wt%) | First Release Layer | 12.9 | 12.9 | 12.9 | 12.9 | 12.9 | 12.9 |
| | Second Release Layer | 4.77 | 3.42 | 3.19 | 2.14 | 5.76 | 8.6 |

(continued)

| Classification | Example 1 | Example 5 | Example 6 | Example 7 | Example 8 | Example 9 |
|---|---|---|---|---|---|---|
| Lithium Transfer Efficiency (%) | 100 | 90 | 86 | 0 | 100 | 100 |

As can be confirmed in Table 1 and Table 2, the release films for transferring lithium manufactured in Examples 1 to 6 not only had excellent release properties, but also showed excellent lithium transfer efficiency, with no lithium transfer to the first release layer and a pin hole count of 100 or less.

**Experimental Example 6: Measurement of the number of pin holes**

Lithium was deposited on one surface of the second release layer of the release film for transferring lithium manufactured in Example 1 by using the physical vapor deposition (PVD) method to have thicknesses of 5 μm, 10 μm, 15 μm, 20 μm and 30 μm, respectively. Thereafter, white light was irradiated on the first release layer of each of the release film for transferring lithium manufactured in Example 1, each of which had lithium deposited at different thicknesses, and the deposited lithium was observed with the naked eye. The number of pinholes generated per unit area of 10 cm × 10 cm is shown in Table 3.

[Table 3]

| Thickness of Lithium | Number of Pin Holes (Units) |
|---|---|
| 5 μm | 100 or less |
| 10 μm | 100 or less |
| 15 μm | 100 or less |
| 20 μm | 100 or less |
| 30 μm | Thermal deformation occurs |

As can be confirmed in Table 3, even when lithium was deposited with thicknesses of 5 μm, 10 μm, 15 μm and 20 μm on one surface of the second release layer of the release film for transferring lithium manufactured in Example 1, it was confirmed that the number of pin holes per unit area of 10 cm × 10 cm was 100 or less. However, when lithium was deposited to a thickness of 30 μm on one surface of the second release layer of the release film for transferring lithium manufactured in Example 1, it was confirmed that thermal deformation occurred during the deposition process.

Simple modifications or changes of the present invention can be easily implemented by those skilled in the art, and all such modifications or changes can be considered to be included in the scope of the present invention.

[National Research and Development Project That Supported This Invention]
[Project Identification Number] 1415185120
[Project Number] 20011254
[Name of Ministry] Ministry of Trade, Industry and Resources
[Name of Project Management (Specialized) Institution] Korea Planning & Evaluation Institute of Industrial Technology
[Title of Research Project] Material and Component Technology Development (Title of Investigation and Analysis Project: Material and Component Technology Development)
[Title of Research Task] Development of Ultra-Peeling Functional Release Adhesive Material Film Technology with Minimum Sequential Change
[Contribution Ratio] 1/1
[Name of Project Performance Institution] Youlchon Chemical Co., Ltd.
[Research Period] January 1, 2023 to December 31, 2023

## Claims

1. A release film for transferring lithium, in which a first release layer; a base film; and a second release layer are sequentially laminated,

wherein the release film satisfies Condition (1) below:

$$(1)\ A < B$$

wherein in Condition (1) above, A represents a release force of the first release layer, and B represents a release force of the second release layer.

**2.** The release film of claim 1, wherein the release film further satisfies Condition (2) below:

$$(2)\ A : B = 1 : 1.1 \text{ to } 5.0$$

wherein in Condition (2) above, A represents a release force of the first release layer, and B represents a release force of the second release layer.

**3.** The release film of claim 1, wherein after lithium is deposited on one surface of the second release layer to a thickness of 2 to 25 μm, when white light is irradiated on the first release layer, 100 or less pin holes are generated per unit area of 10 cm × 10 cm in the deposited lithium.

**4.** The release film of claim 3, wherein after lithium is deposited on one surface of the second release layer to a thickness of 2 to 8 μm, when white light is irradiated on the first release layer, 100 or less pin holes are generated per unit area of 10 cm × 10 cm in the deposited lithium.

**5.** The release film of claim 1, wherein the second release layer comprises a resin composition, and wherein the resin composition comprises a silicone-based resin in an amount of 10 to 70 wt% based on the total weight%.

**6.** The release film of claim 5, wherein the second release layer comprises 0.1 to 5 parts by weight of a catalyst and 0.1 to 5 parts by weight of an adhesion enhancer, based on 100 parts by weight of the resin composition.

**7.** The release film of claim 1, wherein the first release layer comprises 2.2 to 25 wt% of silicon (Si) based on the total weight%, and
wherein the second release layer comprises 2 to 5 wt% of silicon (Si) based on the total weight%.

**8.** The release film of claim 1, wherein the base film comprises one or more selected from polyethylene terephthalate (PET), polypropylene (PP), polybutylene terephthalate (PBT), polyethylene naphthalate (PEN), polyimide (PI) and polyethylene (PE).

**9.** The release film of claim 5, wherein the resin composition comprises a silicone-based resin and a non-silicone-based resin,

wherein the silicone-based resin comprises one or more selected from an addition-reaction type silicone-based resin, a condensation-reaction type silicone-based resin and a UV-reaction type silicone-based resin, and
wherein the non-silicone-based resin comprises one or more selected from a cellulose resin, an acrylate-based resin, a melamine-based resin and an alkyd-based resin.

**10.** A method for manufacturing a release film for transferring lithium, the method comprising:

a first step of preparing a base film; and
a second step of applying a composition for forming a first release layer on one surface of the base film, applying a composition for forming a second release film on the other surface of the base film, and then curing to form a first release layer on one surface of the base film and form a second release layer on the other surface of the base film,
wherein the release film satisfies Condition (1) below:

$$(1)\ A < B$$

wherein in Condition (1) above, A represents a release force of the first release layer, and B represents a release

force of the second release layer.

**11.** The method of claim 10, wherein the release film further satisfies Condition (2) below:

$$(2)\ A : B = 1 : 1.1 \text{ to } 5.0$$

wherein in Condition (2) above, A represents a release force of the first release layer, and B represents a release force of the second release layer.

**12.** The method of claim 10, wherein after lithium is deposited on one surface of the second release layer to a thickness of 2 to 25 μm, when white light is irradiated on the first release layer, 100 or less pin holes are generated per unit area of 10 cm × 10 cm in the deposited lithium.

**13.** The method of claim 10, wherein the composition for forming a second release layer is a mixture of a resin composition, a catalyst, an adhesion enhancer and a solvent, and
wherein the resin composition is mixed with 10 to 70 wt% of a silicone-based resin based on the total weight%.

**14.** The method of claim 13, wherein the composition for forming a second release layer is a mixture of 0.1 to 5 parts by weight of a catalyst, 0.1 to 5 parts by weight of an adhesion enhancer and 800 to 1,000 parts by weight of a solvent, based on 100 parts by weight of the resin composition.

**15.** The method of claim 10, wherein the curing is performed at a temperature of 100 to 140°C for 10 to 40 seconds.

[FIG. 1]

30
20
10

[FIG. 2]

40
30
20
10
White light

## INTERNATIONAL SEARCH REPORT

International application No.
**PCT/KR2024/096289**

### A. CLASSIFICATION OF SUBJECT MATTER

**C08J 7/04**(2006.01)i; **C08J 7/044**(2020.01)i; **C08J 5/18**(2006.01)i; **C09D 183/04**(2006.01)i; **C09D 7/65**(2018.01)i; **C08L 1/02**(2006.01)i; **C08L 33/06**(2006.01)i; **C08L 61/28**(2006.01)i; **H01M 4/04**(2006.01)i

According to International Patent Classification (IPC) or to both national classification and IPC

### B. FIELDS SEARCHED

Minimum documentation searched (classification system followed by classification symbols)

C08J 7/04(2006.01); B32B 15/08(2006.01); B44C 1/17(2006.01); C08J 5/18(2006.01); H01M 10/052(2010.01); H01M 4/134(2010.01); H01M 4/38(2006.01); H01M 4/66(2006.01); H05K 3/00(2006.01); H05K 3/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 이형필름(release film), 이형력(release force), 백색광(white light), 핀 홀(pin hole), 수지(resin)

### C. DOCUMENTS CONSIDERED TO BE RELEVANT

| Category* | Citation of document, with indication, where appropriate, of the relevant passages | Relevant to claim No. |
|---|---|---|
| Y<br>A | KR 10-2020-0087437 A (LG CHEM, LTD.) 21 July 2020 (2020-07-21)<br>See abstract; paragraphs [0055], [0063] and [0119]-[0122]; and claims 7-9. | 1-4,8,10-12,15<br>5-7,9,13,14 |
| Y | KR 10-2017-0097965 A (YOULCHON CHEMICAL CO., LTD.) 29 August 2017 (2017-08-29)<br>See paragraph [0039]; and claim 1. | 1-4,8,10-12,15 |
| A | JP 2000-228571 A (NITTO DENKO CORP.) 15 August 2000 (2000-08-15)<br>See paragraph [0040]; and claims 1-3. | 1-15 |
| A | JP 2004-090488 A (PANAC CO., LTD.) 25 March 2004 (2004-03-25)<br>See claims 1-4. | 1-15 |
| A | JP 2020-501313 A (LG CHEM LTD.) 16 January 2020 (2020-01-16)<br>See claims 1, 4, 5 and 8. | 1-15 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 January 2025** | **20 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/096289**

| Patent document cited in search report | Publication date (day/month/year) | Patent family member(s) | Publication date (day/month/year) |
|---|---|---|---|
| KR 10-2020-0087437 A | 21 July 2020 | CN 111868974 A | 30 October 2020 |
| | | CN 111868974 B | 10 November 2023 |
| | | EP 3764436 A1 | 13 January 2021 |
| | | EP 3764436 B1 | 03 May 2023 |
| | | JP 2021-517729 A | 26 July 2021 |
| | | JP 7248777 B2 | 29 March 2023 |
| | | KR 10-2415166 B1 | 29 June 2022 |
| | | US 11942629 B2 | 26 March 2024 |
| | | US 2021-0020927 A1 | 21 January 2021 |
| | | WO 2020-145753 A1 | 16 July 2020 |
| KR 10-2017-0097965 A | 29 August 2017 | KR 10-1774874 B1 | 05 September 2017 |
| JP 2000-228571 A | 15 August 2000 | None | |
| JP 2004-090488 A | 25 March 2004 | None | |
| JP 2020-501313 A | 16 January 2020 | CN 110235285 A | 13 September 2019 |
| | | CN 110235285 B | 10 June 2022 |
| | | EP 3540828 A2 | 18 September 2019 |
| | | JP 07-037006 B2 | 16 March 2022 |
| | | KR 10-2019-0011886 A | 08 February 2019 |
| | | KR 10-2148508 B1 | 26 August 2020 |
| | | US 11152601 B2 | 19 October 2021 |
| | | US 2019-0319255 A1 | 17 October 2019 |
| | | WO 2019-022402 A2 | 31 January 2019 |
| | | WO 2019-022402 A3 | 11 April 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 68988-89-6